# EUROPÄISCHE PATENTSCHRIFT

(11) **EP 2 122 205 B1**
(45) Veröffentlichungstag und Bekanntmachung des Hinweises auf die Patenterteilung: **23.11.2011**
(21) Anmeldenummer: 08708860.5
(22) Anmeldetag: 11.02.2008
(51) Int. Cl.: F16H 61/24, F16H 59/02, F16H 61/22

(54) **ELEKTRISCHE SCHALTEINRICHTUNG FÜR EIN KRAFTFAHRZEUG**
ELECTRIC SHIFTING DEVICE FOR A MOTOR VEHICLE
DISPOSITIF DE CHANGEMENT DE VITESSE ELECTRIQUE POUR UN VEHICULE A MOTEUR

(30) Priorität: 13.02.2007 DE 102007007753
(43) Veröffentlichungstag der Anmeldung: 25.11.2009
(73) Patentinhaber: Leopold Kostal GmbH & Co. KG, 58513 Lüdenscheid (DE)
(72) Erfinder: BÜHLMANN, Rainer, 59439 Holzwickede (DE); WINKELMANN, Ralf, 46359 Heiden (DE); LUTTER, Thomas, 59755 Arnsberg (DE)
(74) Vertreter: Kerkmann, Detlef
(86) Internationale Anmeldenummer: PCT/EP2008/051606
(87) Internationale Veröffentlichungsnummer: WO 2008/098897

(56) Entgegenhaltungen:
- WO-A-03/002895
- US-A1- 2004 195 071

## Beschreibung

Die Erfindung betrifft eine elektrische Schalteinrichtung für ein Kraftfahrzeug, mit einem Schalthebel und mit einem Elektromagneten, der einen Schaltanschlag für den Schalthebel in bzw. außer Kraft setzen kann, wobei ein Eingang des Elektromagneten mit einem ersten steuerbaren elektrischen Schalter verbunden ist, dessen Steuereingang mit einem Signalausgang eines Mikrocontrollers verbunden ist.

Derartige Schalteinrichtungen werden bei Kraftfahrzeugen eingesetzt, die mit einem automatisierten Schaltgetriebe ausgerüstet sind. Dabei wird der eigentliche Schaltvorgang elektrohydraulisch oder elektromotorisch vorgenommen, während der jeweilige Schaltwunsch des Fahrers elektrisch oder elektronisch erfasst wird. Dem Fahrer stehen bei einem solchen automatisierten Schaltgetriebe die elektrische Schalteinrichtung mit einem Schalthebel und gegebenenfalls zusätzlichen, etwa am Lenkrad angeordneten Wippschaltern zum Herauf- und Herunterschalten zur Verfügung.

Der Schalthebel einer solchen Schalteinrichtung kann multistabil oder auch monostabil ausgeführt sein, dass heißt er kann entweder in mehrere feste Positionen einstellbar sein oder er besitzt, ähnlich einem Joystick nur eine stabile Ruheposition, in die der Schalthebel aus mehreren instabilen Stellpositionen immer wieder zurückfällt.
In beiden Fällen ist es wünschenswert oder sogar erforderlich, in Abhängigkeit vom aktuell gewählten Schaltzustand, jeweils bestimmte Schaltzustände von der nächsten Auswahl auszuschließen. Vorteilhaft ist es beispielsweise, bei einer linearen Kette möglicher Schaltzustände anzuzeigen, wenn die Auswahlmöglichkeiten in einer Schaltrichtung erschöpft sind.

Da im allgemeinen nicht nur die Erfassung sondern auch die Verarbeitung der jeweiligen Schaltzustände auf elektrischem oder elektronischem Weg abläuft, kann und wird im allgemeinen der Ausschluss bestimmter Umschaltmöglichkeiten durch die zugrundeliegende Schaltlogik erfolgen. So wird insbesondere im Falle intelligenter Gangwahlschalter (Shift by wire) die Wählhebelposition über einen bzw. mehrere Fahrzeugbusse an ein Getriebesteuergerät übermittelt. Allerdings ist es aus ergonomischen Gründen vorteilhaft, wenn der Bediener der Schalteinrichtung auch eine unmittelbare haptische Rückmeldung über derzeit nicht auswählbare Schaltfunktionen erhält. Eine solche Rückmeldung erhält der Fahrer eines Kraftfahrzeuges insbesondere über Sperren oder Anschläge, die mit dem Schalthebel zusammenwirken. Das Dokument WO 03002895 zeigt eine Sperrvorrichtung mit allen Merkmalen des Oberbegriffs des Anspruchs 1.
Betätigt werden derartige Sperren oder Anschläge durch elektrische Aktuatoren wie beispielsweise Elektromagneten. Diese werden zur Blockierung bestimmter Wählhebelbewegungen in Shift by Wire Gangwahlschaltern in der Regel vom Mikrocontroller des Gangwahlschalters bzw. dort vorhandenen Leistungsschaltern geschaltet. Durch intelligente Ansteuerungskonzepte wie z.B. pulsweitenmodulierte Ansteuerung können Sperrmagnete bzw. Sperrsysteme in Abhängigkeit verschiedener Umgebungsbedingungen so angesteuert werden, dass eine Optimierung des Elektromagneten insbesondere im Hinblick auf den zur Verfügung stehenden geringen Bauraum möglich ist.

Allerdings setzen die damit verwendbaren, kleineren Elektromagnete aus Gründen der thermischen Belastbarkeit und aus Gründen der Schaltgeräuschminimierung derartige intelligente Ansteuerungen, die im Regelfall über mikrocontrollergesteuerte Profile erreicht werden, auch zwingend voraus.

Die elektrische Schalteinrichtung gemäß der vorliegenden Erfindung hat gegenüber vorbekannten Einrichtungen den Vorteil, dass ein Elektromagnet in einem Gangwahlschalter nicht nur über die interne Gangwahlschalterelektronik sondern im Falle einer Fehlfunktion dieser Elektronik auch direkt über einen externen Schalter, etwa in einem Getriebesteuergerät angesteuert werden kann.

Dies wird erfindungsgemäß dadurch erreicht, dass der Eingang des Elektromagneten zusätzlich mit einem zweiten steuerbaren elektrischen Schalter verbunden ist, dessen Steuereingang mit einem Signalausgang eines durch ein analoges Eingangssignal ansteuerbaren Timerbausteins verbunden ist.

Eine intelligente Ansteuerung der Einrichtung über mikrocontrollergesteuerte Profile ist dadurch möglich, dass der Mikrocontroller zur Aktivierung des Elektromagneten über seinen Signalausgang den Steuereingang des steuerbaren Schalters mit einem pulsweitenmodulierten Signal beaufschlagt, wobei über das Puls-Pausen-Verhältnis dieses Signals der Stromfluss durch die Spule des Elektromagneten gesteuert wird.

In einer bevorzugten Ausführung des erfindungsgemäßen Gegenstands ist vorgesehen, dass der Timerbaustein an seinem Signalausgang ein pulsweitenmoduliertes Signal mit einer voreingestellten Frequenz ausgibt, wobei das Puls-Pausen-Verhältnis dieses Signals durch den Wert einer an einem Analogeingang des Timerbausteins anstehenden Spannung bestimmt wird.

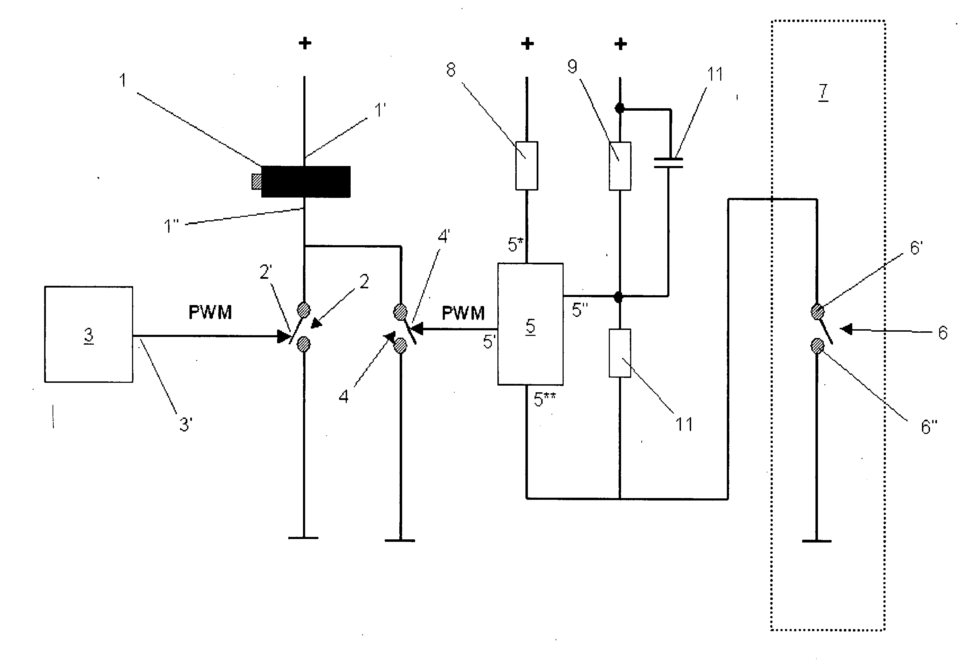

Weitere vorteilhafte Ausgestaltungen und Weiterbildungen der erfindungsgemäßen Schalteinrichtung ergeben sich aus weiteren Unteransprüchen und werden anhand des in der Zeichnung dargestellten Ausführungsbeispiels erläutert.

Die einzige Figur zeigt dabei ein Prinzipschaltbild der elektrischen Ansteuerschaltung eines Elektromagneten 1 für eine Einrichtung, mit der ein Schaltanschlag für den Schalthebel einer elektrischen Gangwahlschalteinrichtung in bzw. außer Kraft gesetzt wird. Diese Ansteuerschaltung ist Teil einer Gangwahlschalterelektronik. Der Elektromagnet 1 ist mit einem ersten Anschluss 1' mit dem positiven Pol (+) der Bordnetzspannungsquelle verbunden, wenn die Zündung des Kraftfahrzeugs eingeschaltet ist. Der zweite Anschluss 1" des Elektromagneten 1 ist mit einem ersten steuerbaren Schalter 2 verbunden, und kann zur Aktivierung des Elektromagneten 1 über diesen Schalter 2 mit Masse, also mit dem negativen Pol (-) der Bordnetzspannungsquelle verbunden werden.

Der Steuereingang 2' dieses ersten steuerbaren elektrischen Schalters 2 ist mit einem Signalausgang 3' eines Mikrocontrollers 3 der Gangwahlschalterelektronik verbunden. Zur Aktivierung des Elektromagneten 1 beaufschlagt der Mikrocontroller 3 über seinen Signalausgang 3' den Steuereingang 2' des steuerbaren Schalters 2 mit einem pulsweitenmodulierten (PWM) Signal. Über das Puls-Pausen-Verhältnis dieses PWM-Signals kann der Stromfluss durch die Spule des Elektromagneten 1 gesteuert werden. Die Steuerung erfolgt hierbei in der Weise, dass zunächst durch längere Ansteuerpulse ein höherer Stromfluss zum Anziehen des Ankers des Elektromagneten 1 erzielt wird. Zum Halten des Elektromagneten 1 im angezogenen Zustand reicht dann ein geringerer Stromfluss aus, so dass die Ansteuerpulse entsprechend kürzer gewählt werden können.

Die Ansteuerung des Schalters 2 und damit des Elektromagneten 1 durch den Mikrocontroller 3 ermöglicht es, Umgebungsbedingungen wie insbesondere die Umgebungstemperatur und die Eigenerwärmung des Elektromagneten 1 zu berücksichtigen und den Stromfluss durch die Spule den gegebenen Erfordernissen anzupassen.

Um bereinem Ausfall oder einer Fehlfunktion des Mikrocontrollers 3 dennoch die Schaltanschlageinrichtung für den Schalthebel einer elektrischen Gangwahlschalteinrichtung in einen definierten Zustand bringen zu können, besteht die Anforderung, diese direkt durch einen externen Schalter 6, etwa im Getriebesteuergerät 7 beeinflussen zu können.

Dazu ist der zweite Anschluss 1" des Elektromagneten 1 zusätzlich mit einem zweiten steuerbaren Schalter 4 verbunden, und kann zur Aktivierung des Elektromagneten 1 auch über diesen Schalter 4 mit Masse, also mit dem negativen Pol (-) der Bordnetzspannungsquelle verbunden werden.

Der Steuereingang 4' dieses zweiten steuerbaren elektrischen Schalters 4 ist mit einem Signalausgang 5' eines durch ein analoges Eingangssignal ansteuerbaren Timerbausteins 5 verbunden. Der Timerbaustein, bei dem es sich etwa um einen NE 555 handelt, gibt an seinem Signalausgang 5' ein pulsweitenmoduliertes (PWM) Signal mit einer voreingestellten Frequenz aus, wobei das Puls-Pausen-Verhältnis dieses PWM-Signals durch den Wert einer an einem Analogeingang 5" des Timerbausteins 5 anstehenden Spannung bestimmt wird.
Der Timerbaustein 5 ist mit seinem positiven Spannungsversorgungseingang 5* über einen Vorwiderstand 8 bei eingeschalteter Zündung des Kraftfahrzeugs mit dem positiven Pol (+) der Bordnetzspannungsquelle verbunden. Der negative Spannungsversorgungseingang 5** des Timerbausteins 5 ist mit dem externen Schalter 6 verbunden und kann durch diesen, wenn dieser zur externen Aktivierung des Elektromagneten 1 geschlossen wird, mit dem negativen Pol (-) der Bordnetzspannungsquelle verbunden werden. Eine Stromversorgung, und damit eine Aktivierung des Timerbausteins 5 erfolgt also in jedem Falle nur dann, wenn der externe Schalter geschlossen ist, so dass eine den Normalbetrieb störende, unbeabsichtigte Ansteuerung des Elektromagneten 1 über diesen Weg ausgeschlossen ist.

Der Analogeingang 5' des Timerbausteins 5 ist einerseits über eine Parallelschaltung bestehend aus einem Widerstand 9 und einem Kondensator 10 bei eingeschalteter Zündung des Kraftfahrzeugs mit dem positiven Pol (+) der Bordnetzspannungsquelle und andererseits über einen Vorwiderstand 11 mit dem externen Schalter 6 im Getriebesteuergerät 7 verbunden, und damit, wenn dieser Schalter 6 geschlossen ist, mit Masse also mit dem negativen Pol (-) der Bordnetzspannungsquelle verbunden.

Wenn der externe Schalter 6 zur Aktivierung des Elektromagneten 1 geschlossen ist, wird der Timerbaustein 5 mit Spannung versorgt und gestartet. Am Analogeingang 5" des Timerbausteins 5 steht eine Eingangsspannung an, die im ersten Moment der vollen Bordnetzspannung entspricht und dann gemäß der Ladekennlinie des Kondensators 10 exponentiell abfällt, und schließlich im stationären Zustand einen Wert annimmt, der durch den aus den Widerständen 9 und 11 gebildeten Spannungsteiler vorgegeben ist.
Entsprechend dieses Eingangssignals gibt der Timerbaustein 5 über seinen Signalausgang 5' zunächst Ansteuerpulse mit einem großen Puls-Pausen-Verhältnis an den Eingang 4' des zweiten steuerbaren Schalters 4 ab, so dass ein höherer Stromfluss zum Anziehen des Ankers des Elektromagneten 1 erzielt wird. Mit dem Abfallen der Eingangsspannung am Analogeingang 5" des Timerbausteins 5 verringert sich auch das Puls-Pausen-Verhältnis des PWM-Signals an dessen Signalausgang 5', bis schließlich der stationäre Zustand erreicht ist, bei dem ein geringerer, zum Halten des Elektromagneten 1 im angezogenen Zustand ausreichender Stromfluss eingestellt ist.
Die Zeit bis zum Erreichen des stationären Zustandes sowie das Puls-Pausen-Verhältnis in diesem Zustand werden durch entsprechende Dimensionierung der Widerstände 9 und 11 sowie des Kondensators 10 eingestellt.

## Patentansprüche

1. Elektrische Schalteinrichtung für ein Kraftfahrzeug, mit einem Schalthebel und mit einem Elektromagneten (1), der einen Schaltanschlag für den Schalthebel in bzw. außer Kraft setzen kann, wobei ein Eingang (1 ") des Elektromagneten (1) mit einem ersten steuerbaren elektrischen Schalter (2) verbunden ist, dessen Steuereingang (2') mit einem Signalausgang (3') eines Mikrocontrollers (3) verbunden ist, **dadurch gekennzeichnet, dass** der Eingang (1 ") des Elektromagneten (1) zusätzlich mit einem zweiten steuerbaren elektrischen Schalter (4) verbunden ist, dessen Steuereingang (4') mit einem Signalausgang (5') eines durch ein analoges Eingangssignal ansteuerbaren Timerbausteins (5) verbunden ist.

2. Elektrische Schalteinrichtung nach Anspruch 1, **dadurch gekennzeichnet, dass** der Mikrocontroller (3) zur Aktivierung des Elektromagneten (1) über seinen Signalausgang (3') den Steuereingang (2') des steuerbaren Schalters (2) mit einem pulsweitenmodulierten Signal beaufschlagt, wobei über das Puls-Pausen-Verhältnis dieses Signals der Stromfluss durch die Spule des Elektromagneten (1) gesteuert wird.

3. Elektrische Schalteinrichtung nach Anspruch 1 oder 2, **dadurch gekennzeichnet, dass** der Timerbaustein (5) an seinem Signalausgang (5') ein pulsweitenmoduliertes Signal mit einer voreingestellten Frequenz ausgibt, wobei das Puls-Pausen-Verhältnis dieses Signals durch den Wert einer an einem Analogeingang (5") des Timerbausteins (5) anstehenden Spannung bestimmt wird.

4. Elektrische Schalteinrichtung nach Anspruch 3, **dadurch gekennzeichnet, dass** der Analogeingang (5") des Timerbausteins (5) einerseits über eine Parallelschaltung eines Widerstands (9) und eines Kondensators (10) mit einem positiven Spannungspotential und andererseits über einen Vorwiderstand (11) mit einem Anschluss (6') eines externen Schalters (6) verbunden ist, welcher mit seinem anderen Anschluss (6") direkt mit dem negativen Pol (-) der Bordnetzspannungsquelle verbunden ist.

5. Elektrische Schalteinrichtung nach einem der Ansprüche 1 bis 4, **dadurch gekennzeichnet, dass** der Timerbaustein (5) mit seinem positiven Spannungsversorgungseingang (5*) über einen Vorwiderstand (8) mit dem positiven Pol (+) der Bordnetzspannungsquelle verbunden ist, und dass der negative Spannungsversorgungseingang (5**) des Timerbausteins(5) mit einem Anschluss (6') eines externen Schalters (6) verbunden ist, welcher mit seinem anderen Anschluss (6") direkt mit negativen Pol (-) der Bordnetzspannungsquelle verbunden ist.

6. Elektrische Schalteinrichtung nach einem der Ansprüche 1 bis 5, **dadurch gekennzeichnet, dass** der Schalthebel ein Gangwahlschalter ist.

## Claims

1. Electrical switching device for a motor vehicle, having a switching lever and having an electromagnet (1) which can activate and/or deactivate a switching stop for the switching lever, for which purpose an input (1 ") of the electromagnet (1) is connected to a first controllable electrical switch (2), the control input (2') of which is connected to a signal output (3') of a microcontroller (3), **characterised in that** the input (1 ") of the electromagnet (1) is additionally connected to a second controllable electrical switch (4), the control input (4') of which is connected to a signal output (5') of a timer module (5) which can be actuated by an analogue input signal.

2. Electrical switching device in accordance with Claim 1, **characterised in that** in order to activate the electromagnet (1) a pulse width modulated signal is applied to the control input (2') of the controllable switch (2) by the microcontroller (3) by way of its signal output (3'), the current flow being controlled by the coil of the electromagnet (1) by way of the mark-to-space ratio of the said signal.

3. Electrical switching device in accordance with Claim 1 or Claim 2, **characterised in that** the timer module (5) emits a pulse width modulated signal of a preset frequency at its signal output (5'), for which the mark-to-space ratio of this signal is determined by the value of a voltage applied at an analogue input (5") of the timer module (5).

4. Electrical switching device in accordance with Claim 3, **characterised in that** the analogue input (5") of the timer module (5) is on the one hand connected by means of a parallel circuit of a resistor (9) and a capacitor (10) to a positive voltage potential, and on the other hand by means of a series resistor (11) to one terminal (6') of an external switch (6), the other terminal (6") of which is directly connected to the negative pole (-) of the on-board voltage source.

5. Electrical switching device in accordance with any of Claims 1 to 4, **characterised in that** the timer module (5) is connected with its positive voltage supply input (5*) to the positive pole (+) of the on-board voltage source by way of a series resistance (8) and that the negative voltage supply input (5**) of the timer module (5) is connected to one terminal (6') of an external switch (6), the other terminal (6") of which is directly connected to the negative pole (-) of the on-board voltage source.

6. Electrical switching device in accordance with any of Claims 1 to 5, **characterised in that** the switching lever is a gear selector switch.

## Revendications

1. Dispositif de commutation électrique pour véhicule automobile, avec un levier de commutation et avec un électroaimant (1), qui peut mettre en service, respectivement hors service une butée de commutation du levier de commutation, sachant qu'une entrée (1") de l'électroaimant (1) est reliée à un premier commutateur électrique (2) commandé, dont l'entrée de commande (2') est reliée à une sortie de signal (3') d'un microcontrôleur (3), **caractérisé en ce que** l'entrée (1") de l'électroaimant (1) est reliée, en supplément, à un deuxième commutateur électrique (4), dont l'entrée de commande (4') est reliée à une sortie de signal (5') d'un module d'horloge (5), qui peut être excité par un signal d'entrée analogique.

2. Dispositif de commutation électrique selon la revendication 1, **caractérisé en ce que**, pour l'activation de l'électroaimant (1), le microcontrôleur (3), par l'intermédiaire de sa sortie de signal (3'), soumet l'entrée de commande (2') du commutateur (2) à un signal à largeur d'impulsion modulée, sachant que le flux de courant, circulant dans la bobine de l'électroaimant (1), est commandé par l'intermédiaire de l'intervalle d'impulsions de ce signal.

3. Dispositif de commutation électrique selon revendication 1 ou 2, **caractérisé en ce que** le module d'horloge (5) lance, à sa sortie de signal (5'), un signal à largeur d'impulsions modulée, avec une fréquence préréglée, sachant que l'intervalle d'impulsions de ce signal est déterminé par la valeur d'une tension, qui règne à une sortie analogique (5") du module d'horloge (5).

4. Dispositif de commutation électrique selon la revendication 3, **caractérisé en ce que** l'entrée analogique (5") du module d'horloge (5) est reliée, d'une part, par l'intermédiaire d'un circuit en parallèle d'une résistance (9) et d'un condensateur (10), à un potentiel de tension positif, et, d'autre part, par l'intermédiaire d'une résistance (11), à un raccord (6') d'un commutateur externe (6), qui, avec son autre raccord (6"), est relié directement au pôle négatif (-) de la source de tension de bord.

5. Dispositif de commutation électrique selon l'une des revendications 1 à 4, **caractérisé en ce que** le module d'horloge (5) est relié, avec son entrée d'alimentation en tension positive (5*), au pôle positif (+) de la source de tension de bord, par l'intermédiaire d'une résistance série (8) et que l'entrée d'alimentation en tension négative (5**) dudit module d'horloge (5) est reliée à un raccord (6') d'un commutateur externe (6), qui, avec son autre raccord (6"), est relié directement au pôle négatif (-) de la source de tension de bord.

6. Dispositif de commutation électrique selon l'une des revendications 1 à 5, **caractérisé en ce que** le levier de commutation est un sélecteur de vitesse.
